# EUROPEAN PATENT APPLICATION

(11) **EP 4 706 955 A1**
(43) Date of publication of application: **11.03.2026**
(21) Application number: 24198882.3
(22) Date of filing: 06.09.2024
(51) Int. Cl.: B32B 7/12, B32B 27/08, B32B 27/16, B32B 27/32, B32B 27/36, C08J 5/18, C09J 175/04

(54) **LAMINATION STRUCTURE WITH SOLVENT-FREE ADHESIVE**

(71) Applicant: Siegwerk Druckfarben AG & Co. KGaA, 53721 Siegburg (DE)
(72) Inventor: Kulawig, Andreas, 53757 Sankt Augustin (DE); Eisele, Gilles, 74250 Fillinges (FR); Le Bail, Nicolas, 74105 Annemasse Cedex (FR)
(74) Representative: Hepp Wenger Ryffel AG

(57) **Abstract**

The present invention is related to a laminate (1) for packaging applications, comprising a first substrate layer (2) and an adhesive layer (5) present on a surface of said first substrate layer (2), and a second substrate layer (2') on which at least one ink layer (4) is provided, characterized in that said adhesive layer (5) is made from a solvent-free one-component adhesive composition comprising isocyanate moieties as functional groups. The present invention is furthermore related to laminate comprising an adhesive layer (5) made from a one-component adhesive composition.

## Description

The present invention is related to a lamination structure comprising an adhesive layer that is based on a solvent-free one-component adhesive composition.

Laminates are a common structure and are used in a variety of technical areas, such as in flexible packaging.

The term "laminate" refers to a product that consists of a stack of layers, wherein one layer (an outermost layer or a core layer) is defined as substrate or substrate layer. Onto said substrate or substrate layer, at least one layer and preferably a stack of layers is provided, wherein said layer or stack of layers typically is or comprises a printed layer or several printed layers. Typically, a further substrate or substrate layer is applied on the remote side of said layer or stack of layers, so that said layer or stack of layers is sandwiched between these substrate layers and protected from environmental influences.

In such a laminate, the one or more printed layers are typically connected to a substrate layer via a primer layer and/or an adhesive layer. Such a primer layer and/or an adhesive layer in a laminate has to meet specific requirements with respect to adhesion, reduced brittleness (i.e. increased flexibility) and especially has to achieve a high bond strength value.

An adhesive layer is prepared from an adhesive composition. Adhesive compositions are commonly used to bond together a variety of substrates, for example plastic substrates such as polyethylene, polypropylene, polyester, or polyamide, or other kinds of substrates such as metal or paper.

The use of adhesives in different laminating end-use applications is generally known. For example, adhesives can be used in the manufacture of film/film and film/foil laminates used in the flexible packaging industry, especially for food packaging.

For example, a first laminate structure may be formed by applying one or more printing ink layers onto a first substrate, preferably with the aid of a primer layer that is first applied onto said first substrate, followed by application of the one or more printing ink layers onto said primer layer. An adhesive layer may then be applied onto the free surface of a second substrate, and then the laminate structures may be combined by a conventional lamination process using a conventional lamination machine.

Adhesive compositions for laminating applications are generally known. They can be solvent-based, water-based or solvent-free.

A commonly known solvent-based adhesive composition for laminating applications comprises a polyurethane. For laminating applications, typically in a two-component polyurethane-based adhesive composition is used that includes a first component comprising an isocyanate and/or a polyurethane prepolymer comprising free isocyanate groups, and a second component comprising one or more polyols, such as a polyether polyol or a polyester polyol.

The two components of the adhesive composition are formulated separately in a commonly used organic solvent such as methyl ethyl ketone, ethyl acetate or toluene, optionally together with one or more additives commonly used in adhesive compositions.

For use, the two components are combined in a predetermined ratio, thereby forming an adhesive composition that is then applied on the desired substrate surface. Another surface is brought into contact with the applied adhesive composition, and after curing of the adhesive composition, the desired laminated structure is formed.

An example of a suitable adhesive is a typical solvent-based 2K adhesive like Adcote 186-812, preferably in combination with a typical hardener like 9L10 (both raw materials are commercially available from DOW).

Such a two-component adhesive composition has several drawbacks. The two components have to be stored separately, in order to prevent their premature reaction which would result in premature curing. This doubles the necessary storage facilities. Furthermore, as two components have to be used this results also in increased raw material costs.

When used, the two components have to be mixed with each other in the correct ratio. This has to be done at a manufacturer's site and is a source of possible dosing errors. Also, it might happen due to e.g. production issues that an unused amount of the components may be left and (due to their limited pot life) have to be disposed as waste.

Finally, cleaning of equipment required for curing a two-component adhesive composition can be cumbersome.

While one-component adhesive compositions are known as such, for laminating applications they have not been deemed suitable.

In WO 2020/117399 A1, it was suggested to use a lamination adhesive composition that was designated as general-purpose mono-component adhesive having predominantly isocyanate groups. As an example, the commercial adhesive Adcote^{™} 331 was mentioned. Ad-cote^{™} 331 is a solvent-based isocyanate-terminated polyether urethane adhesive, i.e. an isocyanate-terminated polyurethane adhesive. According to WO 2020/117399 A1, Adcote^{™} 331 comprises a predominant content of isocyanate groups. Further details about Adcote^{™} 331 are not known.

In WO 2020/117399 A1 it is explicitly disclosed that said purpose mono-component adhesive is to be used in combination with a functionalized film layer, wherein the at least one functionalized film layer comprises a polar-reactive group polyolefin layer. In WO 2020/117399 A1, as polar-reactive group polyolefin layer only a grafted polyolefin layer was explicitly tested.

In the examples of WO 2020/117399 A1 it was shown that a corona-treated LLDPE copolymer substrate was not satisfactory for use with said mono-component adhesive Adcote^{™} 331. The teaching of WO 2020/117399 A1 is limited to the use of a mono-component isocyanate-terminated polyurethane adhesive in combination with a polyolefin layer that is functionalized by grafting. Other substrate layers such as corona-treated substrates were found to result in insufficient characteristics of the laminate.

In the art, also solvent-free one-component adhesive compositions are known, albeit only for less demanding lamination applications (e.g. in WO 2010/026002 A1 for bonding unprinted substrate films with each other).

Solvent-free compositions have the advantage that they do not cause any emission of volatile organic components (VOCs) and exhibit a reduced hazard profile (due to the lack of inflammable organic solvents). This makes them easier to transport and store. For example, fire protection measures can be reduced or even avoided.

Also, solvent-free adhesive compositions provide for manufacturing and processing advantages. For example, no drying units and no solvent recovery steps are to be implemented. Moreover, since the risk of explosion hazards is significantly reduced or even eliminated, the processing equipment is less costly.

So far, no solvent-free one-component adhesive compositions for laminating applications involving printed laminates have been described.

It was the problem of the present invention to provide a printed laminate for packaging applications that overcomes the problems associated with the use of a two-component adhesive composition in the manufacture of said substrate.

The above problem was solved by the present invention.

In detail, the present invention is related to a laminate for packaging applications, comprising a first substrate layer and an adhesive layer present on a surface of said first substrate layer, and a second substrate layer on which at least one ink layer is provided, characterized in that said adhesive layer is made from a solvent-free one-component adhesive composition comprising isocyanate moieties as functional groups.

In another aspect, the present invention is related to a laminate for packaging applications, comprising a first substrate layer and an adhesive layer present on a surface of said first substrate layer, characterized in that said adhesive layer is made from a solvent-free one-component adhesive composition comprising isocyanate moieties as functional groups, wherein said one-component adhesive composition is a reaction product of a polyisocyanate with a polyether polyol in a molar ratio of 2:1 or less.

Unless indicated otherwise, any weight average molecular weight is determined by GPC (gel permeation chromatography) using polystyrene as standard.

It has been found that the disclosed solvent-free one-component adhesive composition can be used for laminating applications in combination with a substrate that is non-grafted with any polar component, but is merely corona-treated.

According to a preferred embodiment, said one-component adhesive composition is a reaction product of a polyisocyanate with a polyether polyol.

According to a preferred embodiment, said one-component adhesive composition has a concentration of isocyanate groups in the range from 0,5 to 10%, preferably 1 to 9 %, more preferably 2 to 8%, especially preferably 3 to 7%, based on the weight of the entire amount of the composition.

According to the present invention, the concentration of isocyanate groups is the amount of isocyanate groups in the composition, based on the weight of the entire amount of the composition.

The present invention provides a solution that is broadly applicable for lamination and overcomes the drawbacks associated with two-component adhesive compositions. No mixing of separate components at a manufacturer's site is necessary, and so no mixing errors can occur. No problem with any remaining components occurs, since no mixing of separate components is required that might give rise to any remaining unused raw material. Also, the limited pot life of 2K-adhesive systems caused by reaction of the two components during processing resulting in viscosity increase and reduction of bond strength values is no issue for a 1K-adhesive system as no reaction can take place between the two components. Thus, waste is reduced or avoided. No mixing equipment for mixing separate components of a two-component adhesive composition has to be provided, reducing both costs and cleaning time. Raw material costs and storage costs can be reduced.

Furthermore, in the one-component adhesive composition of the present invention no free polyhydroxy polyol component is present, but only as a moiety of the one-component adhesive. Moreover, no organic solvent is present.

This results in a reduction of the dry coating weight of the adhesive layer made from the one-component adhesive composition according to the present invention. The laminate comprising the adhesive layer made from the one-component adhesive composition according to the present invention thus also has a higher content of recyclable material (percentage of polymer in the packaging structure), which improves the overall recyclability of the laminate, respectively a flexible packaging that is made from said laminate.

The absence of organic solvent additionally makes it easier to transport and store the one-component adhesive of the present invention. Since the one-component adhesive of the present invention does not cause any emission of volatile organic components (VOCs) and exhibits a reduced hazard profile (due to the lack of inflammable organic solvents), for example, fire protection measures can be reduced or even avoided.

According to a preferred embodiment, said adhesive layer is applied with a dry coating weight of less than 1 g/m², preferably in the range from 0,1 to 0,9 g/m², more preferably in the range from 0,2 to 0,8 g/m², especially preferably in the range from 0,3 to 0,7 g/m². The dry coating weight can be determined by known methods, for example on the basis of the amount of used adhesive composition, or by weighing the uncoated article and the dried coated article (i.e. the article to which the adhesive layer was applied) and determining the dry coating weight as the difference between these two weights.

The one-component adhesive composition according to the present invention has a lower formulation complexity, due to its simpler composition, and also has more robust application properties compared to conventional two-component adhesive compositions.

In particular, it has been found that with the one-component adhesive composition according to the present invention comparable or higher bond strength values can be obtained at a lower dry coating weight, as compared to conventional two-component adhesive compositions.

Also, faster curing is observed with the one-component adhesive composition according to the present invention, as compared to conventional two-component adhesive compositions.

Preferably, the said one-component adhesive composition is curable under moisture-free conditions. By "curable under moisture-free conditions" it is to be understood that the one-component adhesive composition according to the present invention does not require any water for curing. It is not necessary that any water be added to the composition for curing, or that a higher defined air moisture is provide during the method. Also, the one-component adhesive composition according to the present invention is curable under very dry conditions of less than 20 % RH (relative humidity, preferably less than 10% RH, more preferably less than 5% RH.

The one-component adhesive composition according to the present invention is solvent-free.

The one-component adhesive composition according to the present invention is composed such that the functional groups of said one component comprise isocyanate moieties. Preferably, the one component does not have any other functional groups than isocyanate moieties. By "functional group", chemical groups are meant which contribute to a curing reaction to obtain the adhesive layer from said one-component adhesive composition. Such functional groups are free (i.e. unreacted) functional groups and no internal groups such as ether, ester or urethane groups which are derived from a reaction of starting materials (such as from two alcohols, an alcohol and an acid, or an alcohol and an isocyanate) .

The one-component adhesive composition according to the present invention is preferably made from an isocyanate component comprising at least two free isocyanate moieties. Said isocyanate component can be a polyisocyanate (i.e. an isocyanate having more than one unreacted isocyanate moieties) or an isocyanate oligomer.

Said isocyanate component can be selected from the group consisting of aromatic polyisocyanates, aliphatic polyisocyanates, cycloaliphatic polyisocyanates, and combinations of two or more thereof. An "aromatic polyisocyanate" is a polyisocyanate that contains one or more aromatic rings. An "aliphatic polyisocyanate" contains no aromatic rings. A "cycloaliphatic polyisocyanate" is an aliphatic polyisocyanate that contains at least one aliphatic ring structure.

Suitable aromatic polyisocyanates comprise 3 to 16 carbon atoms, more preferably 4 to 12 carbon atoms, and 2 to 5, preferably 2-4 free unreacted isocyanate moieties. Preferred polyisocyanates include, but are not limited to, 1,3- and 1,4-phenylene diisocyanate, 1,5-naphthylene diisocyanate, 2,6-tolulene diisocyanate, 2,4-tolulene diisocyanate (2,4-TDI), 2,4'-diphenylmethane diisocyanate (2,4'-MDI), 4,4'-diphenylmethane diisocyanate (4,4'-MDI), 3,3'-Dimethyl-4,4'-Biphenyldiisocyanate (TODI), polymeric isocyanates, and combinations of two or more thereof.

Suitable aliphatic polyisocyanates may be linear or branched aliphatic hydrocarbons with 3 to 16 carbon atoms, more preferably 4 to 12 carbon atoms, in the alkylene residue, and 2 to 5, preferably 2-4 free unreacted isocyanate moieties.

Suitable cycloaliphatic polyisocyanates advantageously have 4 to 18 carbon atoms, more preferably 4 to 12 carbon atoms, and 2 to 5, preferably 2-4 free unreacted isocyanate moieties.

Examples of suitable aliphatic and cycloaliphatic polyisocyanates include, but are not limited to, cyclohexane diisocyanate, methylcyclohexane diisocyanate, ethylcyclohexane diisocyanate, propylcyclohexane diisocyanate, methyldiethylcyclohexane diisocyanate, propane diisocyanate, butane diisocyanate, pentane diisocyanate, hexane diisocyanate, heptane diisocyanate, octane diisocyanate, nonane diisocyanate, nonane triisocyanate, such as 4-isocyanatomethyl-1,8-octane diisocyanate (TIN), decane di- and triisocyanate, undecane di- and triisocyanate and dodecane di- and triisocyanate, isophorone diisocyanate (IPDI), hexamethylene diisocyanate (HDI), diisocyanatodicyclohexylmethane (H12MDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), xylylene diisocyanate (XDI), tetramethylxylylene diisocyanate, and dimers, trimers (isocyanurates) such as the trimer of hexane-1,6 diisocyanate, and mixtures of the above.

According to a preferred embodiment of the present invention, said one-component adhesive is a compound that is derived from an isocyanate-containing compound which is derived from a reaction of one or more of the above polyisocyanates with a compound having an isocyanate-reactive functional group. For example, monohydroxy (comprising only one reactive OH group) or polyhydroxy (comprising more than one reactive OH group) compounds may be reacted with one or more of the above polyisocyanates, resulting in urethanes. As an example, the reaction products of ethylene glycol, propylene glycol, neopentyl glycol, or trimethylolpropane with e.g. an aliphatic diisocyanate like hexane-1,6-diisocyanate or an aromatic diisocyanate like toluene-2,4-diisocyanate may be mentioned. One preferred urethane is the reaction product of trimethylolpropane with toluene-2,4-diisocyanate, where all three OH groups of the trimethylolpropane are reacted with toluene-2,4-diisocyanate:

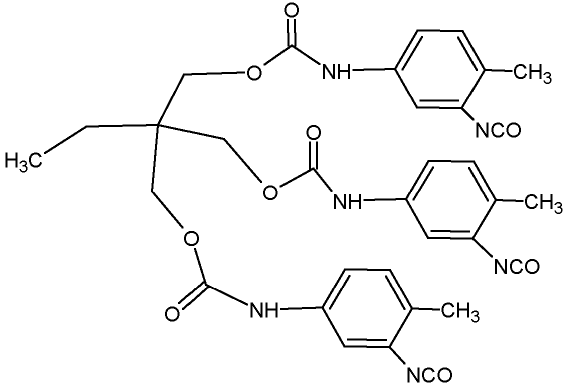

Although this compound contains three urethane moieties, it is not a urethane oligomer or a polyurethane, since it is not composed of any repeating unit.

Likewise, monoamine or polyamine compounds, or monothiol or polythiol compounds may be reacted with one or more of the above polyisocyanates, which would result in urea compounds or thiourethane compounds.

According to a preferred embodiment of the present invention, said one-component adhesive may be an oligomer. An oligomer may be obtained from the reaction of one or more of the above polyisocyanates with a compound having at least two isocyanate-reactive functional groups, wherein a plurality of repeating units is generated. Such an oligomer has to comprise at least two free isocyanate (NCO) groups. As an example, the reaction of ethylene glycol and hexane-1,6-diisocyanate under such conditions may be mentioned that an oligomer of the following formula is obtained:

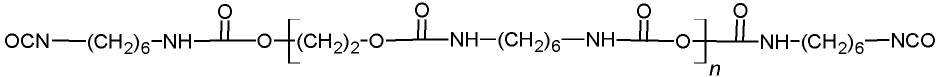

An oligomer is typically defined as having a small number of repeating units (e.g. in the above formula n is small), whereas a polymer is typically defined as having a large number of repeating units (e.g. in the above formula n is large). However, there is no sharp distinction between an oligomer and a polymer. In accordance with the present invention, an oligomer is defined as having a weight average molecular weight (Mw) below 5000 g/mol.

According to a preferred embodiment of the present invention, said one-component adhesive is a polyurethane. A polyurethane is defined as a polymer derived from the reaction of one or more of the above polyisocyanates with a compound having at least two isocyanate-reactive hydroxy groups, wherein a plurality of repeating units comprising urethane groups is generated. For example, in the formula shown above and reproduced below again, the repeating units (in the bracket) comprise urethane groups, and n is set such that the compound has a weight average molecular weight (Mw) of at least 5000 g/mol:

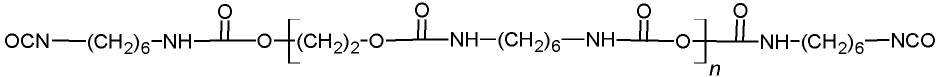

Preferably, said compound having at least two isocyanate-reactive hydroxy groups is a polyhydroxy polyol component. Suitable examples are polyethylene glycol, dipropylene glycol, polypropylene glycol, dibutylene glycol, or polybutylene glycol. Particularly suitable are polyether polyols with a weight average molecular weight of about 100 to about 2000 g/mol, preferably from 200 to 1200 g/mol.

According to a preferred embodiment, the one-component adhesive is the reaction product of a polyisocyanate with a polyether polyol. Preferably, the polyisocyanate and the polyether polyol are reacted in a molar ratio in the range from 2:1 or less; more preferably 2:1 to 1:1.

According to a preferred embodiment, said adhesive compound has a weight average Molecular weight (MW) in the range of 2500 to 40000 g/mol, preferably 5000 to 30000 g/mol, as determined by GPC (gel permeation chromatography) using polystyrene as standard.

The one-component adhesive composition according to the present invention may also comprise combinations of the above isocyanate components comprising at least two free isocyanate moieties.

According to another preferred embodiment of the present invention, at least one silane group may be additionally present in the solvent-free one-component adhesive composition according to the present invention. For example, an amino-silane compound may be attached to the solvent-free one-component adhesive composition comprising isocyanate moieties. The attachment may be effected via a reaction of the amino group of the amino-silane compound with a free isocyanate group of the branched backbone structure. The silane groups remain unreacted. The resulting compound thus has free isocyanate groups and free silane groups.

As used herein, the term "amino-silane compound, designates a compound comprising at least one alkoxysilane group wherein the silicon atom is linked to at least one amino group via a hydrocarbon moiety. The amino group should have at least one hydrogen atom. Therefore, the amino group is a primary or a secondary amine, preferably a primary amine. The amino-silane compound may comprise between 1 and 5 amino groups, preferably one or two amino groups. In case more than one amino groups are present in the amino-silane compound, at least one amino group is a primary amine or a secondary amine.

The amino group is linked to the silicon atom via a hydrocarbon moiety. The hydrocarbon moiety can comprise from 1 to 10 carbon atoms, preferably from 1 to 5 carbon atoms. If the amino group is a secondary amine, a second hydrocarbon moiety with 1 to 10 carbon atoms, preferably from 1 to 5 carbon atoms, may be attached to said amino group. According to a preferred embodiment, the amino-silane is selected from the group consisting of 3-aminopropylmethyldiethoxysilane, (3-aminopropyl)triethoxysilane, N-{2-aminoethyl)-3-aminopropyltriethoxysilane, bis(3-(triethoxysilyl) propyl) amine, bis(trimethoxysilylpropyl)amine, (3-aminopropyl)trimethoxysilane, N-{2-aminoethyl)-3-aminopropyltrimethoxysilane, 3-[2-(2-aminoethylamino)ethylamino]propyltrimethoxysilane, 4-amino-3,3-dimethylbutyltrimethoxysilane, 3-trimethoxysilyl- N-(3-trimethoxysilylpropyl)propan-1-amine, and mixtures thereof.

The one-component adhesive composition according to the present invention may additionally comprise one or more additives typically used in adhesive compositions. Examples of such additives include, but are not limited to, tackifiers, plasticizers, rheology modifiers, adhesion promoters, antioxidants, fillers, colorants, surfactants, catalysts, and combinations of two or more thereof. Preferably, the one-component adhesive composition according to the present invention comprises 0 to 5 wt.-%, more preferably 0.1 to 4 wt.-%, and especially preferred 0.5 to 3 wt.-%, based on the weight of the entire adhesive composition, of at least one additive.

According to a particularly preferred embodiment, the amount of residual polyisocyanate starting material is 0.1 wt.-% or less.

This is advantageous in light of regulatory issues. This can be especially easily achieved when the one-component adhesive is the reaction product of a polyisocyanate and a polyether polyol in a molar ratio in the range from 2:1 or less; more preferably 2:1 to 1:1, as described above.

The one-component adhesive composition according to the present invention may be prepared by mixing the above ingredients by a conventional mixing process, such as stirring using a stirrer, and preferably under heating, preferably at a temperature of 50 to 90°C. Depending on the isocyanate present in the composition, preparation of the one-component adhesive composition according to the present invention may be carried out under an inert gas atmosphere (e.g. under nitrogen).

Preferably, the reaction is conducted in the presence of a catalyst. Any catalyst commonly used for catalyzing the reaction of an isocyanate group with a hydroxy group may be used. Nonlimiting examples of suitable catalysts include tetra-n-butyl titanate, zinc sulphate, organic tin catalyst, zirconium chelate, and combinations thereof.

According to a particularly preferred embodiment, the reaction is conducted such that in the final reaction mixture the amount of residual polyisocyanate starting material is 0.1 wt.-% or less. This can be achieved, for example, by a respective selection of the molar ratios of the starting material, a careful control of the reaction conditions (for example, the progress of the reaction can be controlled by controlling the amount of reactive isocyanate groups in the reaction mixture, for example by FT-NIR), or by removing residual starting material, for example by distillation.

The present invention also encompasses a method of preparing a laminate, comprising the step of applying the one-component adhesive composition described above onto a free surface of a substrate layer, preferably with a dry coating weight of less than 1 g/m², preferably in the range from 0,1 to 0,9 g/m², more preferably in the range from 0,2 to 0,8 g/m², especially preferably in the range from 0,3 to 0,7 g/m², and preferably under moisture-free conditions.

The adhesive layer can be applied onto the substrate by any conventional coating technique, preferably by flexographic or gravure printing.

It has been found that according to the present invention it is possible to provide an adhesive layer with a satisfactory adhesive function even when it is applied with a low dry coating weight. Preferably, laminating applications with the application of such a low dry coating weight of the adhesive layer are possible also in combination with a substrate that is non-grafted with any polar component, but is merely corona-treated.

The laminate (laminated product) of the present invention is characterized by the presence of an adhesive layer made from the one-component adhesive composition composition described in any of the aspects above, on a surface of a substrate layer.

According to the present invention, the terms "substrate" and "substrate layer" are used interchangeably.

According to the present invention, the term "laminate" refers to a product that consists of a stack of layers, wherein one layer (an outermost layer or a core layer) is defined as substrate or substrate layer. For example, the substrate layer may be a plastic layer, preferably a transparent plastic layer. A laminate may also preferably comprise more than one of those substrate layers, most preferably as outermost layers, and in between these substrate layers there is provided a printed layer or several printed layers, as well as other functional layers.

According to a preferred embodiment, the laminate of the present invention comprises two substrate layers, but may also comprise more than 2 substrates.

According to a preferred embodiment of the present invention, on the surface of the adhesive layer remote from said substrate layer there is a stack of layers comprising a second substrate layer. In other words, there is an adhesive layer made from the one-component adhesive composition composition described in any of the aspects above, on a surface of a substrate layer, and on the other surface of the adhesive layer, there is applied said stack of layers comprising a second substrate layer.

The substrate layers of said laminate can be the same or different and any substrate such as a plastic substrate. Preferably, the substrate is a plastic substrate as conventionally used in the field of plastic laminates. Examples of suitable plastic substrates are polyethylene (PE), for example low density polyethylene (LDPE), polypropylene (PP), for example cast polypropylene (CPP) or oriented polypropylene (OPP) or silicone oxide coated oriented polypropylene (OPP SiOx), polyamide (PA) or polyethylene terephthalate (PET). These substrates may be coated with a metallization layer. For example, a substrate may be coated with a layer of a metal oxide such as aluminium oxide. An example is PP ALOX, which is a polypropylene substrate that has been coated with an aluminium oxide layer. Typically, such metallization provides for barrier properties.

According to a preferred embodiment of the present invention, said substrate layers are each composed of a material selected from the group consisting of polyethylene, polypropylene, preferably oriented polypropylene or metallized oriented polypropylene, polyamide, polyethylene terephthalate, and polylactide.

According to a preferred embodiment of the present invention, at least one of said substrate layers, namely the substrate layer onto which the adhesive layer is to be applied, is selected from the group consisting of a non-functional substrate layer, a coated substrate layer, and a corona-treated substrate layer. It has been found that the adhesive layer according to the present invention can be used for laminating applications in combination with a substrate that is non-grafted with any polar component, but is merely corona-treated.

Corona treatment is the most widely used surface treatment method in the plastic film and other related industries and has been used for a long time. Corona treatment increases the surface energy of plastic films, foils and paper to improve wettability and adhesion of inks, coatings and adhesives. Corona treatment uses a low temperature (https://en.wikipedia.org/wiki/Corona_discharge) plasma to impart changes in the properties of a surface. The corona (https://en.wikipedia.org/wiki/Plasma_(physics)) is generated by the application of high voltage to an electrode that has a sharp tip. Materials such as plastics or paper may be passed through the corona plasma thus generated in order to change the surface energy of the material. Corona treatment and devices for performing corona treatment are well-known.

According to a preferred embodiment of the present invention, said stack of layers furthermore comprises, between said second substrate layer and said adhesive layer, at least one additional layer selected from the group consisting of a primer layer and a functional coating, for example an oxygen barrier layer.

According to one embodiment of the present invention, a primer layer may be applied onto one of the substrates by applying a primer composition thereto. The terms "primer composition" and "primer layer" are known in the art and refer to a composition or layer made therefrom which is applied onto a surface of a substrate in order to provide said surface with the required properties for applying a printing layer thereupon. These required properties comprise, for example, good adhesion properties, so that the printing ink layer applied thereupon does not detach during normal operation conditions. Moreover, these required properties can, depending on the substrate, comprise sufficient smoothness so that a printing ink layer applied thereupon shows the desired gloss.

According to another embodiment of the present invention, a primer layer that is suitable for delamination and/or deinking may be applied onto one of the substrates. This involves characteristics such as very good solubility in an alkaline aqueous medium in combination with very good overprintability and water resistance. Such a primer layer that is suitable for deinking is disclosed, for example, in WO 2021/165081 A1.

In said another embodiment, first a primer layer may be applied onto the substrate, and a printed layer may be applied (directly or indirectly via at least one intermediate layer) onto the primer layer. This allows efficient deinking of the substrate by dissolving the primer layer and thus removing the printed layer that is arranged on said primer layer, from the substrate.

The primer layer can be applied onto the substrate by any conventional coating technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

The primer layer can be preferably applied onto the substrate in such an amount that a dry coating weight of 0.2-1.5 g/m², preferably 0.4-1.3 g/m², and especially preferred 0.6-1.0 g/m² is obtained.

According to a preferred embodiment of the present invention, said laminate may further comprise a barrier layer, so that the barrier layer is between said substrate layers. Such barrier layers are known in the art. Preferably, said barrier layer is a gas impermeable or a gas resistant barrier layer. As an example, a barrier coating like an ethylene-vinylalcohol (EVOH) coating may be used for the purposes of the present invention. A preferred barrier layer is disclosed in WO 2023/285183 A1.

The barrier layer is preferably applied in a dry solids dry coating weight in the range from 0,2 g/m² to 2 g/m², preferably 0,5 g/m² to 1,5 g/m², more preferably 0,6 g/m² to 1,2 g/m².

According to a preferred embodiment of the present invention, said laminate comprises, between said second substrate layer and said adhesive layer, at least one ink layer. Preferably, said at least one ink layer is selected from the group consisting of a white layer, a black ink layer, a colored ink layer, and combinations thereof.

According to one embodiment of the present invention, at least one printing ink layer is applied on a side of an optionally provided primer layer that is not in contact with one of said substrate layers. This results in a stack of printing ink layers that is provided between the adhesive layer and the primer layer.

The ink layer(s) used in the laminate of the present invention may be made from any ink conventionally used in flexible packaging applications. Such an ink can be applied on the substrate by any standard technique, preferably by flexographic or gravure printing.

According to a preferred embodiment of the present invention, a first laminate may be formed by applying optionally a primer composition onto a second substrate and then applying one or more printing ink layer onto the free surface of the applied primer layer, if present, or directly onto the second substrate. The adhesive layer according to the present invention is then applied onto the free surface of the first substrate, and then the laminates may be combined by a conventional lamination process using a conventional lamination machine. As a result, in said embodiment the adhesive layer in the final laminate is between the first substrate layer described above and one printed layer.

Preferably, the laminate according to the present invention has a bond strength value, provided by the adhesive layer of the present invention, of higher than 1.5N/15mm, as measured with an Instron Universal device.

The present invention is furthermore related to an article, comprising a laminate as described above.

According to the present invention, said article is preferably a flexible packing.

Many articles such as food articles are stored in flexible packagings, i.e. packagings which are made of a material which shows some flexibility and can thus undergo certain modifications of its shape.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging).

The present invention is furthermore related to a method of preparing a laminate as described above, comprising the step of applying a solvent-free one-component adhesive composition with isocyanate moieties as functional groups onto a free surface of a substrate layer.

The present invention will now be described below in more detail by reference to non-limiting figures and examples.

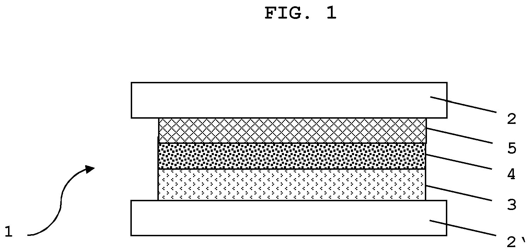

- Fig. 1: shows an illustration of a laminate according to an embodiment of the present invention.

In Fig. 1, a laminate 1 according to an embodiment of the present invention is shown. The laminate 1 comprises a first substrate 2, made from a plastic substrate such as PE or OPP, and a second substrate 2', made from a plastic substrate such as PE, PET, metOPP. The first substrate 2 and the second substrate 2' may be of the same or a different material.

On one surface of said second substrate 2', there is applied an optional primer layer 3 . On one surface of said primer layer 3 that is remote from the substrate 2', there is provided a printing ink layer 4. Alternatively, said printing ink layer 4 may be applied directly onto one surface of said second substrate 2'.

One surface of said other substrate 2 is combined with the stack of substrate 2', optional primer layer 3 and printing layer 4 via an adhesive layer 5 according to any of the aspects of the present invention.

### Examples

### Example 1

A solvent-free one-component adhesive composition according to the present invention was prepared by mixing starting materials in the amounts given in table 1.

**Table 1**

| Component | wt.-% |
|---|---|
| Aromatic polyisocyanate (TDI) | 10,57 |
| Polyetherpolyol (PPG 2000) | 89,28 |
| Catalyst (liquid Zr-chelate) | 0,15 |

The reaction mixture was heated to 80°c and reacted for 2 hours under stirring.

The resulting adhesive compound had a weight average molecular weight (MW) of 26633 g/mol, as measured by GPC using polystyrene as a standard.

### Example 2

The adhesive compound of example 1 was applied onto the substrates indicated below in table 2, using a Labo-Combi 400 pilot solvent-free lamination unit with 4 rollers. The application weight was adjusted by setting the process temperature to 55°C and width of the nip between the first and second roller. The line speed was 50 m/min.

The substrate coated with the adhesive layer was dried with hot air, and a second substrate (counter substrate) indicated below in table 2 was applied using a glass rod. The thus obtained laminates were placed between two metal plates under pressure and stored in an oven for 6 days at 40°C.

### Comparative example 1

Example 2 was repeated, but with a commercial two-component adhesive composition ((Henkel LA 3644/LA 6055 in a mixing ratio of 20:1)) that was applied at a dry coating weight of 1,5 GSM (g/m²) (comparative example 1a) and 2,4 GSM (g/m²) (comparative example 1b) .

### Bond strength values (BSV)

Bond strength values were measured with an Instron 3365 device. The peel off was measured at a 90° angle. The BSV measurement conditions were as follows: Sample width 15 mm, speed of 300 mm/min.

The following results were obtained:

**Table 2**

| | | Example 2 | Comparative example 1a | Comparative example 1b |
|---|---|---|---|---|
| Coating weight (g/m²) | | 1, 5 | 1, 5 | 2, 4 |
| Substrates | | | | |
| | OPP GND/PE | 6 | 3 | 3 |
| | OPP GND/OPP GND | 4, 5B | 5B | 5B |
| | PET RNKC/PE | 1, 7 | 3B | 3B |
| | OPP GND/CPP | 5 | 3, 1 | 3, 2 |

| | | | | |
|---|---|---|---|---|
| OPP GND is a commercially available transparent, two sides heat sealable, one side treated OPP film. PET RNK C is a commercially available (e.g. as Hostaphan RNK C) biaxially oriented, coextruded PET film. | | | | |

Film break (B) indicates that the bond strength value is so high that it cannot be measured, since the entire polymer film is torn before the layers could be separated.

It can be seen that in the example according to the present invention using the inventive solvent-free one-component adhesive a comparable or even higher bond strength value could be obtained than with the commercial two-component adhesive, at a lower dry coating weight.

### Example 3 and comparative example 2

Example 2 and comparative example 1 were repeated, but this time the respective adhesive compound was applied onto a PET substrate which contained a previously applied ink layer (from a conventional flexographic ink).

The following BSV values were obtained:

**Table 3**

| | Example 3 | Comparative example 2 |
|---|---|---|
| Coating weight (g/m²) | 1, 1 | 3, 0 |
| PET printed/PE substrates | 1, 7 | 1, 7 |

It can be seen that with the conventional 2K adhesive composition, a much higher coating weight was required for obtaining a comparable BSV as to the 1K solvent-free adhesive composition of the present invention.

## Claims

1. A laminate (1) for packaging applications, comprising a first substrate layer (2) and an adhesive layer (5) present on a surface of said first substrate layer (2), and a second substrate layer (2') on which at least one ink layer (4) is provided, **characterized in that** said adhesive layer (5) is made from a solvent-free one-component adhesive composition comprising isocyanate moieties as functional groups.

2. Laminate for packaging applications, comprising a first substrate layer and an adhesive layer present on a surface of said first substrate layer, **characterized in that** said adhesive layer is made from a solvent-free one-component adhesive composition comprising isocyanate moieties as functional groups, wherein said one-component adhesive composition is a reaction product of a polyisocyanate with a polyether polyol in a molar ratio of 2:1 or less.

3. Laminate according to claim 1 or 2, **characterized in that** said one-component adhesive composition has a concentration of isocyanate groups in the range from 0,5 to 10%, preferably 1 to 9 %, more preferably 2 to 8%, especially preferably 3 to 7%.

4. Laminate according to claim 1 or 2, **characterized in that** said one-component adhesive composition is curable under moisture-free conditions.

5. Laminate according to any one of the preceding claims, **characterized in that** said adhesive layer (5) is made from a one-component adhesive composition and is applied with a dry coating weight of less than 1 g/m², preferably in the range from 0,1 to 0,9 g/m², more preferably in the range from 0,2 to 0,8 g/m², especially preferably in the range from 0,3 to 0, 7 g/m².

6. Laminate according to any one of the preceding claims, **characterized in that** said one-component adhesive composition is a reaction product of a polyisocyanate with a polyether polyol.

7. Laminate according to any one of the preceding claims, **characterized in that** said substrate layer (2) is composed of a material selected from the group consisting of polyethylene, polypropylene, preferably oriented polypropylene or metallized oriented polypropylene, polyamide, polyethylene terephthalate, and polylactide.

8. Laminate according to any one of any one of the preceding claims, **characterized in that** on the surface of the adhesive layer (5) remote from said substrate layer (2) there is a stack of layers comprising the second substrate layer (2').

9. Laminate according to claim 7, **characterized in that** said second substrate layer (2') is composed of a material selected from the group consisting of polyethylene, polypropylene, preferably oriented polypropylene or metallized oriented polypropylene, polyamide, polyethylene terephthalate, and polylactide.

10. Laminate according to claim 7 or 8, **characterized in that** said stack of layers comprises, between said second substrate layer (2') and said adhesive layer (5), at least one ink layer (4) which is preferably selected from the group consisting of a white layer, a black ink layer, a colored ink layer, and combinations thereof.

11. Laminate according to any one of claims 7 to 10, **characterized in** said stack of layers furthermore comprises, between said second substrate layer (2') and said adhesive layer (5), at least one additional layer selected from the group consisting of a primer layer (3) and a functional coating, for example an oxygen barrier layer.

12. Article, comprising a laminate (1) according to any of claims 1 to 11.

13. Article according to claim 12, **characterized in** said article is a flexible packing.

14. Method of preparing a laminate (1) according to any of claims 1 to 11, comprising the step of applying a solvent-free one-component adhesive composition with isocyanate moieties as functional groups onto a free surface of a substrate layer (2).
